(19) Europäisches Patentamt
European Patent Office
Office européen des brevets

(11) Publication number: **0 109 412**
**B1**

(12) # EUROPEAN PATENT SPECIFICATION

(45) Date of publication of patent specification: **05.08.87**

(51) Int. Cl.[4]: **C 08 L 27/12,** C 08 L 27/18, C 09 D 3/78

(21) Application number: **83901564.1**

(22) Date of filing: **26.04.83**

(86) International application number: **PCT/US83/00601**

(87) International publication number: **WO 83/04036 24.11.83 Gazette 83/27**

(54) **PERFLUOROCARBON RESIN WITH DEGRADATION RETARDER.**

(30) Priority: **20.05.82 US 380354**

(43) Date of publication of application: **30.05.84 Bulletin 84/22**

(45) Publication of the grant of the patent: **05.08.87 Bulletin 87/32**

(84) Designated Contracting States: **BE DE FR GB NL SE**

(56) References cited:
**GB-A- 876 074**
**GB-A-1 391 954**

(73) Proprietor: **E.I. DU PONT DE NEMOURS AND COMPANY**
**1007 Market Street**
**Wilmington Delaware 19898 (US)**

(72) Inventor: **CONCANNON, Thomas Patrick**
**117 Ridgefield Road**
**Newtown Square, PA 19073 (US)**
Inventor: **RUMMEI, Mitzie Kristine**
**151 Bishop Avenue M309**
**Secane, PA 19018 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 109 412 B1**

## Description

Background

This invention relates to perfluorocarbon resin compositions containing degradation retarders. More particularly it relates to such compositions of zeolites and a copolymer of tetrafluoroethylene (TFE) with hexafluoropropylene (HFP) known as FEP, a copolymer of TFE with perfluoropropylvinyl ether (PPVE) known as PFA, a terpolymer of TFE, HFP and PPVE, and polytetrafluoroethylene (PTFE) homopolymer.

Various materials have been found to be useful in retarding the degradation of many polymer systems upon exposure to elevated temperatures or to radiation, particularly ultraviolet light. Often oxygen from the air enhances degradation.

Organo-sulfur compounds and various organo-metallic compounds and hindered amines are used to retard degradation of polymers meant to be used at ordinary temperatures such as 0—100°C by stabilizing the polymer against the effects of ultraviolet light. At higher application temperatures, rubber, plastics, and such hydrogen-containing halogenated hydrocarbon resins as polyvinyl chloride (PVC), polyvinyl fluoride (PVF) and polyvinylidene fluoride ($PVF_2$) have been protected from degradation by the use of various types of zeolites. Some patent references say it is important to use zeolites which have been activated by driving off more or less of the contained water of hydration; others say they should be unactivated. Some say the zeolites should be ion-exchanged with monovalent metals such as sodium; others say divalent metals such as calcium are necessary. Some say at least minimum ion exchange capacity is important; some use two types of zeolites with differing pore size and water content; and still others also require additional retarders to work in conjunction with the zeolites.

However, the patents and publications described above deal with hydrogen-containing resins and not with perfluorocarbon resins such as PFA and FEP. Partially because of the lack of hydrogen, perfluorocarbon resins such as PFA can be used continuously at much higher temperatures than $PVF_2$ without substantial loss of function, perhaps 260°C for PFA and PTFE and 205°C for FEP, versus 150°C for $PVF_2$ and PVF, and 80—120°C for PVC. While the mechanisms of oxidative and thermal degradation of perfluorocarbon resins may not be completely understood, they do not include to a substantial extent one of the primary mechanisms in PVC, PVF and $PVF_2$, dehydrohalogenation, since the perfluorocarbon resins do not include hydrogen in the polymer.

The predominant mechanisms of degradation in perfluorocarbon resins may include formation of peroxides and chain-scission, leading to lower molecular weight species. Even perfluorocarbon resins tend to have functional end groups such as carboxylic acid groups. These can complicate any study of the degradation mechanisms, especially where the molecular weight of the resin decreases during the degradative process. Considering the higher temperature capabilities of PFA, PTFE and FEP compared to $PVF_2$, one cannot forecast what will happen with the perfluorocarbon resins from what has been tried with $PVF_2$, especially when applying the perfluorocarbon resins to uses at temperatures higher than the highest at which $PVF_2$ can be used.

Melt processible fluorine-containing resins, including polymers of tetrafluoroethylene such as with hexafluoropropylene, known as FEP, and also chlorotrifluoroethylene (CTFE) and PVF, but not including polytetrafluoroethylene homopolymer itself, are the subject of US—A—4,248,763—Yoshimura, et al (February 3, 1981). That patent uses a combination of an amine antioxidant, an organosulfurous compound, and at least one of carbon black and iron, nickel or cobalt to obtain improved thermal stability in the melt processible fluorine-containing resin. Although some of these resins are perfluorocarbon resins, others contain hydrogen. The maximum use temperatures for the hydrogen-containing polymers are not as high as those for PFA and FEP, and several of the cited additives tend to be consumed rapidly at temperatures below the maximum use temperatures for PFA and FEP. Such rapidly consumed additives would, of course, not remain available for prolonged effectiveness at elevated temperatures.

Coating compositions containing PTFE, FEP, PFA and other perfluorocarbon resins separately or in combination, in formulations suitable for industrial and cookware applications, are known in several U.S. patents, including: US—A—4,252,859—Concannon and Vary (February 24, 1981); US—A—4,123,401—Berghmans et al (October 31, 1978); US—A—4,143,204—Fang (March 6, 1979); US—A—4,145,325—Vassiliou, et al (March 20, 1979); US—A—4,147,683—Vassiliou, et al (April 3, 1979); US—A—4,150,008—Vassiliou, et al (April 17, 1979); US—A—4,169,083—Vassiliou (September 25, 1979); US—A—4,180,609—Vassiliou (December 25, 1979); and US—A—4,311,634—Vassiliou (January 19, 1982);

Zeolites are reversibly hydrated aluminum silicates generally containing alkali or alkaline earth metal oxides which sometimes can be ion exchanged for other metals or for hydrogen. A general structural definition is

$$M_{x/n}[(AlO_2)_x(SiO_2)_y] \cdot mH_2O$$

wherein M is a cation of valence n, and n is 1 or 2. The ratio of x to y can vary from 1 to a large number, as is known in the art. Zeolites have a framework structure often permitting their use as molecular sieves after removing the water which can leave a void volume (depending on the value of m) of up to 50% with a narrowly defined pore size on the order of a few micrometres. Zeolites include many naturally occurring minerals and synthetic materials. The class of minerals known as feldspathoids is closely related to zeolites

and is sometimes included in the meaning of the term zeolite. Reversibly hydrated feldspathoids, including sodalite and ultramarine, are included herein in the term zeolite. They are more open in structure with larger cavities than feldspars, which are anhydrous. Reversibly hydrated feldspathoids are more closely related to other zeolites than to feldspars. There are hydrated sodium aluminum silicates which are not zeolites and are not within the present invention, such as montmorillonite, sodium bentonite, saponite, and various clays.

Summary of the invention

The present invention provides compositions, including coating compositions, of perfluorocarbon resins (including PFA, PTFE and FEP) and zeolites which act as degradation retarders at elevated temperatures and which contains sulfur in a crystallographic configuration which permits gradual release of the sulfur. Ultramarine blue contains sulfur species trapped in a cage structure from which it can be released gradually over an extended period of time (time release). Ultramarine blue is a preferred zeolite. Other zeolites containing sulfur in a crystallographic structure permitting similar time release may also be particularly desirable. Compositions of the invention include perfluorocarbon resins which give a melt viscosity at temperatures below 380°C of less than about $10^5$ Pa sec, such as PFA and FEP, as well as perfluorocarbon resins which give a melt viscosity at 380°C of less than about $10^5$ Pa sec. The lower melt viscosity polymers can be referred to as melt processible. Copolymers and blends with other perfluorocarbon resins can also be made and classified in the same way. Various perfluorocarbon resins may be blended while still retaining the unique characteristics which characterize the invention within the meaning of the term "consisting essentially". Such fluorocarbon resins include, for instance, PTFE homopolymer, copolymers of TFE with HFP known as FEP, and of TFE with PPVE, with or without HFP to form a terpolymer.

The coating compositions preferably include unsaturated hydrocarbon polymer which decomposes at elevated temperatures but below the melting point of the perfluorocarbon resin, and in which the unsaturated hydrocarbon polymer acts as a coalescing aid to enhance film formation by the perfluorocarbon resin. The unsaturated hydrocarbon polymer can be an acrylic polymer which also contains an oxidation catalyst to aid in decomposing the acrylic polymer. These coating compositions also generally include a pigment, mica, a pigment-coated mica, or metal flake. The mica can give a sparkling appearance and tend to mask penetrating stains. When the pigment used as such or as a coating on the mica is an iron-containing pigment, to obtain certain colors or for any other reason, the iron content sometimes tends to enhance degradation of the perfluorocarbon resin at elevated temperatures. The cause is not known with certainty, but there may be some catalytic effect taking place with the iron oxide catalyzing the formation of peroxides which lead to degradation of the perfluorocarbon resin. Also, it appears that ultramarine blue may change the catalytic activity of the iron oxide.

Detailed disclosure of the preferred embodiments

The degradation of perfluorocarbon polymers such as PFA, PTFE and FEP at elevated temperatures in air is difficult to monitor. Because the inherent elevated temperature capabilities of PFA, PTFE and FEP are so good, there seems to have been less effort directed toward further improving the elevated temperature capabilities for them than for other lower temperature polymers such as PVC and $PVF_2$. However, above certain temperatures PFA, PTFE and FEP are not useful, and they do very slowly degrade even at certain high temperatures at which they are normally used.

We have found that iron oxide pigments sometimes have a tendency to accelerate the degradation of PFA and PTFE at elevated temperatures, and we have found that ultramarine blue and other sulfur containing zeolites provided as particulate pigments tend to counteract that tendency and act as degradation retarders at elevated temperatures even in the absence of iron oxide.

As is known in the art, small amounts of zinc, such as 0.05% by weight of the coating in the form of zinc octoate or zinc oxide, can be added to the ultramarine blue to aid in fixing the sulfur-containing effluents ($H_2S$, etc.) or in slowing down their rate of effluence when desired.

Examples

To demonstrate these effects, films were made of PFA itself, with ultramarine blue, with red iron oxide and with both red iron oxide and ultramarine blue. The films were made on aluminum foil and cured 15 minutes at 177°C and 5 minutes at 427°C, then the aluminum foil was removed by dissolving it with hydrochloric acid. The samples were made as shown in Tables I and II below. (Parts, proportions and percentages herein are by weight except where indicated otherwise).

TABLE I

A PFA aqueous dispersion of fluorinated ethylene perfluoroalkyl vinyl ether copolymer of TFE and PPVE in a ratio of 97:3 at 55% copolymer solids with 5.5% isooctylphenoxy polyethoxyethanol, particle size 0.12—0.25 μm average diameter measured optically.

B Acrylic resin solution acrylic latex polymer of methylmethacrylate, ethyl acrylate and methacrylic acid in a ratio of 39/57/4, at a concentration of 40% dispersed in water.

C Cerium octoate solution, containing 1.07% cerium, being a blend of:

| | |
|---|---|
| 4.69% | cerium octoate (23% cerium) |
| 12.43 | dithylene glycol monobutyl ether |
| 31.02 | hydrocarbon solvent, 95% aromatic |
| 37.02 | triethanolamine |
| 9.85 | oleic acid |
| 4.99 | isooctylphenoxy polyethoxyethanol |

D Red iron oxide pigment millbase of:

| | |
|---|---|
| 45.0% | calcined red $Fe_2O_3$ pigment |
| 54.5 | deionized water |
| 0.5 | sodium lauryl sulfonate surfactant |

E Ultramarine blue pigment millbase

| | |
|---|---|
| 45.01% | Ultramarine blue 5016 pigment coated with silica for acid resistance, |
| 0.25 | isooctylphenoxy polyethoxyethanol |
| 0.25 | "Busperse 53" (reg. Trade Mark) polymeric antifoam agent |
| 0.25 | triethanolamine |
| 55.24 | deionized water |

Each of these ingredients is blended separately, and then they are combined and blended to form dispersions of the following compositions:

TABLE II

| Sample | | |
|---|---|---|
| 1 | A PFA dispersion | 186.57 |
| | B Cerium octoate solution | 18.66 |
| 2 | A PFA dispersion | 186.57 |
| | B Cerium octoate solution | 18.66 |
| | C Red iron oxide millbase | 4.4 |
| 3 | A PFA dispersion | 186.57 |
| | B Cerium octoate solution | 18.66 |
| | D Ultramarine blue millbase | 4.4 |
| 4 | A PFA dispersion | 186.57 |
| | B Cerium octoate solution | 18.66 |
| | C Red iron oxide millbase | 4.4 |
| | D Ultramarine blue millbase | 4.4 |

Free film samples were mounted in a frame holder of the type used for infrared analysis and were heated to 290°C in air in a convection oven for 72 hours. At the end of this time, the samples without ultramarine blue had partially fallen apart, leaving a large hole in the middle, while the samples with ultramarine blue were still in the form of integral films, showing much less degradation.

Nuclear magnetic resonance (NMR) tests were run to determine the effect of ultramarine blue and other zeolites on degradation of PFA. As PFA degrades at elevated temperatures in air, the PPVE perfluoropropyl group tends to disappear, converting the PFA into a polymer closer to PTFE but probably with a lower and less desirable molecular weight than commercial PTFE resin. Also, the advantages of PFA itself are lost.

NMR is used to monitor the $^{19}F$ configuration, showing how large a proportion of the fluorine atoms are in certain molecular positions including those identified with the PPVE perfluoropropyl group.

NMR data are reported in terms of peak height (intensity), peak width at the half height (line broadening from a number of causes), and the area under a peak. The relative areas of peaks associated with different fluorine configurations, including the TFE backbone position and the PPVE position, quantitatively reflect the molar ratio of TFE to PPVE in the polymer. The resonance frequency and the line width of such peaks are reported in terms of parts per million (ppm) of the frequency of the exciting radio frequency. Thus, for instance, for an NMR apparatus using a 184 megahertz field, 1 ppm would be a frequency of 184 hertz. As is known in the art, the sample being analyzed is placed in a homogeneous magnetic field and excited by an oscillating field of radio frequency. An NMR spectrum is obtained by

detecting the absorption of energy by the sample as the applied frequency is swept. NMR spectra with sufficient resolution were obtained at temperatures higher than 300°C, which is well above the melting point of the polymer.

Magnetic susceptibility of iron oxides may complicate these NMR studies, but the results presented herein are believed to be independent of such effects.

One set of samples contained PFA, acrylic polymer to aid in film coalescence, isooctylphenoxy polyethoxyethanol surfactant to aid in pigment dispersion, and cerium octoate to aid in burning out the acrylic polymer and the isooctylphenoxy polyethoxyethanol, iron oxide pigments to accelerate degradation and to simulate colors used commercially, and optionally ultramarine blue. The formulation is given in Table III below:

TABLE III

| Sample | | | |
|---|---|---|---|
| 5 | A | PFA | 70.03 |
| | | isooctylphenoxy polyethoxyethanol | 1.95 |
| | B | Acrylic polymer | 11.69 |
| | C | Cerium octoate | 11.78 |
| | | Deionized water | 10.88 |
| 6 | | Sample 5 | 106.33 |
| | D | Red iron oxide | 1.70 |
| 7 | | Sample 5 | 98.99 |
| | E | Ultramarine blue | 1.70 |
| 8 | | Sample 5 | 106.33 |
| | D | Red iron oxide | 1.70 |
| | E | Ultramarine blue | 1.70 |

The samples were prepared as described above for samples 1—4, and NMR spectra were obtained at 340°C. The peaks near 80—83 ppm indicate PPVE. The peak near 120 ppm indicates TFE. Samples 5, 7 and 8 showed the same amounts of PPVE, not showing any loss from degradation. Sample 6 had no such peak, indicating the PPVE had disappeared.

In another set of NMR tests in which the samples contained similar proportions of PFA, acrylic polymer, cerium octoate, and optional iron oxide, ultramarine blue, and several other types of zeolites added in the same proportions as the ultramarine blue, the line width broadening of the peak near 120 ppm was measured at 340°C. Increased amounts of iron oxide showed greater broadening, indicating among other phenomenon a paramagnetic effect of the iron oxide. When the iron oxide was held constant, broadening differences were detected depending on the type of zeolite. Such increased line broadening (as well as the total area under the 120 ppm peak) is thought to be correlated with the disappearance of PPVE. Ultramarine blue, with its sulfur content and presumed time release phenomena, gave a line broadening of 7.6 ppm. The other zeolites gave line broadening of 11.5 up to 12.6 ppm, versus 16.5 for a sample including iron oxide but not any zeolite. This indicates that all the zeolites tested were effective but that ultramarine blue was by far the most effective in retarding degradation of PFA. Values obtained with certain zeolites are given in Table IV below:

TABLE IV

| Sample | Zeolite | Half height width of 120 ppm line (ppm) |
|---|---|---|
| 9 | Ultramarine blue | 7.6 |
| 10 | LZY-82 | 11.0 |
| 11 | Omega | 11.3 |
| 12 | ZSM-3 | 11.4 |
| 13 | M-8 | 11.5 |
| 14 | Beta | 11.5 |
| 15 | LZY-82 | 11.6 |
| 16 | Ferrierite | 11.7 |
| 17 | Erionite | 11.7 |
| 18 | ELZ-20 | 11.9 |
| 19 | ZSM-4 | 12.0 |
| 20 | Rho | 12.0 |
| 21 | H.S. Sodalite | 12.3 |
| 22 | Chabazite | 12.3 |
| 23 | ZSM-5 | 12.3 |
| 24 | ELZ-L | 12.4 |
| 25 | LZY-52 | 12.6 |
| 26 | Iron oxide—no zeolite | 16.5 |

In further similar NMR tests, with 2% $Fe_2O_3$ and 2% zeolite present, LZY-82 preserved 0.8% PPVE in contrast to ultramarine blue preserving 0.6% PPVE, M-8—0.5%, LZY-52—0.4%, and H.S. sodalite—0.3%.

In still another set of NMR tests on similar samples, the peak area ratios were measured at 300°C, giving the results in Table V below.

TABLE V

| Sample | Composition | Mole % PPVE |
|---|---|---|
| 27 | PFA, no Ce, acrylic or Fe | 1.4 |
| 28 | PFA, Ce acrylic | 1.4 |
| 29 | PFA, Ce, acrylic, Fe | 0.1 |
| 30 | PFA, Fe, no Ce or acrylic | 0.5 |
| 31 | PFA, Ce, acrylic, Fe, ultramarine blue | 0.8 |
| 32 | PFA, Ce, acrylic, Fe, H.S. Sodalite | 0.3 |
| 33 | PFA, Ce, acrylic, Fe, M-8 zeolite | 0.5 |

X-Ray diffraction analysis studies of mixture of PFA, $Fe_2O_3$ and ultramarine blue have shown that $Fe_2O_3$ reacts with PFA at 427°C to form an iron oxyfluoride but that the inclusion of ultramarine blue in the mixture

of PFA and $Fe_2O_3$ appears to inhibit the formation of iron oxyfluoride. The PPVE perfluoropropyl group disappears during the first reaction, but during the second reaction it does not and the magnetic susceptibility does not increase significantly. This may indicate a mechanism of iron-caused degradation of PFA which is retarded by ultramarine blue deactivating a catalytic function of the iron.

Another series of tests used infrared analysis of thermal effluents (IRate) to determine what effect ultramarine blue had on degradation. Samples similar to those discussed above were tested, comparing PFA alone, PFA with iron oxide, PFA with ultramarine blue, and PFA with both iron oxide and ultramarine blue. The tests were performed by heating the samples from room temperature to 400°C in 15 minutes, holding at 400°C for 85 minutes, and then heating from 400°C to 450°C over a period of 80 minutes. Between 400 and 450°C, some HFP and some silicon tetrafluoride were detected, indicating PFA degradation. The $SiF_4$ may have come from fluorine reacting with glass in the equipment. The results showed that the iron oxide increased the rate of PFA degradation while the ultramarine blue cut the rate about in half, with or without iron oxide present. Also some $SO_2$ was detected between 400 and 450°C, demonstrating a time release phenomena. In addition to the demonstrated benefits of zeolites in general, the time release of sulfur from ultramarine blue appears to give further assistance in retarding the degradation of perfluorocarbon resins.

Further IRate testing was performed with samples of PTFE, 50% PTFE/50% PFA, and PFA, a control without pigment oxide and samples alternatively with iron oxide and ultramarine blue pigments.

Over a test period of four hours at 400°C (after heating from 23°C in 15 minutes) in an oxygen-enriched atmosphere of 50% air, 50% oxygen by volume, with a sample size of 1.00 g and a flow rate of 13 ml per minute, in a glass-free, stainless steel system, the following data were obtained. The numbers represent milligrams of fluorine in fluorinated effluents evolved including HF, $COF_2$, $SiF_4$ and HFP. It does not include unidentified low molecular weight saturated fluorocarbons which amount to less than 10% of the total fluorine evolved and any fluorinated sublimates which may have formed.

TABLE VI

| Sample | | Fluorine evolved |
|---|---|---|
| | PTFE | |
| 34 | control | 0.9 |
| 35 | iron oxide | 2.1 |
| 36 | ultramarine blue | 0.3 |
| | 50 PTFE/50 PFA | |
| 37 | control | 11.4 |
| 38 | iron oxide | 25.0 |
| 39 | ultramarine blue | 9.5 |
| | PFA | |
| 40 | control | 30.7 |
| 41 | iron oxide | 23.4 |
| 42 | ultramarine blue | 20.6 |

It can be noted in this set of experiments that the iron oxide increased degradation relative to each control containing PTFE, but not with the PFA sample, while ultramarine blue retarded degradation in each case relative to the control and to the iron oxide sample. Incidentally, $SO_2$ was given off by each PFA-containing sample with ultramarine, but only half as much by the 50 PTFE/50 PFA sample as by the PFA sample, and not at all by the PTFE sample.

Limited data from in-home use tests of aluminum frypans with commercial PTFE multilayer coatings over periods of 6 and 12 months, substituting ultramarine blue for cobalt blue pigment, showed superior scratch resistance and blistering resistance for the coating with the ultramarine blue. Stain resistance was slightly superior for ultramarine blue at 6 months and less superior for cobalt blue at 12 months. Such tests are empirical and do not elucidate the mechanisms of degradation, but they do show that ultramarine blue does give a longer useful life in at least some ways to PTFE coatings. This is evidently due to retarding degradation of the coatings in some way. It has also been found in primers for multilayer PTFE coatings that ultramarine blue gave less oxidative degradation than cobalt blue, as indicated by haziness and bloom or localized deterioration of surface appearance.

In contrast to experience with PFA where iron seems generally to enhance degradation, various tests with PTFE show that iron sometimes seems to enhance and sometimes to retard degradation of PTFE.

However, ultramarine blue appears always to retard degradation of both PFA and PTFE, whether iron is present or not. Therefore, the present invention contemplates the use of ultramarine blue or other zeolites with fluorocarbon resins, whether iron is present or not.

Attempts to use thermogravimetric analysis (TGA) to follow the effects of various additives in retarding degradation of PTFE were unsuccessful. It is difficult to determine optimum specimen size and geometry. TGA data integrate weight gain and weight loss phenomena and do not tell just what is happening with time at elevated temperature.

**Claims**

1. A composition consisting essentially of fluoropolymer resin and zeolite characterized in that the fluoropolymer is perfluorocarbon resin, the composition has a melt viscosity at temperatures below 380°C of less than about $10^5$ Pa sec, and the zeolite contains sulfur in a crystal crystallographic configuration which permits gradual release of the sulfur.
2. The composition of claim 1 in which the perfluorocarbon resin is a copolymer of tetrafluoroethylene with hexafluoropropylene.
3. The composition of claim 1 in which the perfluorocarbon resin is a copolymer of tetrafluoroethylene with perfluoropropylvinyl ether.
4. The composition of claim 1 in which the zeolite is ultramarine blue.
5. A coating composition comprising the composition of claim 1.
6. The coating composition of claim 5 also containing an unsaturated hydrocarbon polymer which decomposes at elevated temperatures but below the melting point of the perfluorocarbon resin, and in which the unsaturated hydrocarbon polymer acts as a coalescing aid to enhance film formation by the perfluorocarbon resin.
7. The coating composition of claim 6 in which the unsaturated hydrocarbon polymer is an acrylic polymer and which also contains an oxidation catalyst to aid in decomposing the acrylic polymer.
8. The coating composition of claim 7 which also contains at least one of pigment, mica, pigment-coated mica, and metal flake.
9. The coating composition of claim 8 in which the pigment includes an iron oxide.
10. The coating composition of claim 9 in which the zeolite is ultramarine blue.

**Patentansprüche**

1. Zusammensetzung, bestehend im wesentlichen aus Fluorpolymerharz und Zeolith, dadurch gekennzeichnet, dass das Fluorpolymere Perfluorkohlenstoffharz ist, die Zusammensetzung eine Schmelzviskosität bei Temperaturen unterhalb 380°C von weniger als etwa $10^5$ Pa sec hat und der Zeolith Schwefel in einer kristallographischen Konfiguration enthält, welche die allmähliche Freigabe des Schwefels erlaubt.
2. Zusammensetzung nach Anspruch 1, in der das Perfluorkohlenstoffharz ein Copolymeres von Tetrafluorethylen mit Hexafluorpropylen ist.
3. Zusammensetzung nach Anspruch 1, in der das Perfluorkohlenstoffharz ein Copolymeres von Tetrafluorethylen mit Perfluorpropylvinylether ist.
4. Zusammensetzung nach Anspruch 1, in der der Zeolith Ultramarinblau ist.
5. Überzugsmasse, enthaltend die Zusammensetzung von Anspruch 1.
6. Überzugsmasse nach Anspruch 5, die ausserdem ein ungesättigt-Kohlenwasserstoff-Polymeres enthält, welches sich bei erhöhten Temperaturen, aber unterhalb des Schmelzpunktes des Perfluorkohlenstoffharzes, zersetzt, und wobei das ungesättigt-Kohlenwasserstoff-Polymere als Koaleszierhilfe wirkt, um die Filmbildung durch das Perfluorkohlenstoffharz zu verstärken.
7. Überzugsmasse nach Anspruch 6, in der das ungesättigt-Kohlenwasserstoff-Polymere ein Acrylpolymeres ist, das ausserdem einen Oxidationskatalysator enthält, um die Zersetzung des Acrylpolymeren zu unterstützen.
8. Überzugsmasse nach Anspruch 7, die ausserdem mindestens eines von Pigment, Glimmer, pigmentüberzogenem Glimmer und Metall-Blättchen enthält.
9. Überzugsmasse nach Anspruch 8, in der das Pigment ein Eisenoxid enthält.
10. Überzugsmasse nach Anspruch 9, in der der Zeolith Ultramarinblau ist.

**Revendications**

1. Une composition essentiellement constituée de résine de fluoropolymère et de zéolite, caractérisée en ce que le fluoropolymère est une résine perfluorocarbonée, la composition a une viscosité à l'état fondu de moins d'environ $10^5$ Pa · s à des températures inférieures 380°C, et la zéolite contient du soufre en une configuration cristallographique qui permet la libération progressive du soufre.
2. La composition de la revendication 1, dans laquelle la résine perfluorocarbonée est un copolymère de tétrafluoroéthylène avec l'hexafluoropropylène.
3. La composition de la revendication 1, dans laquelle la résine perfluorocarbonée est un copolymère de tétrafluoroéthylène avec le perfluoro(éther de propyle et de vinyle).

4. La composition de la revendication 1, dans laquelle la zéolite est le bleu d'outremer.

5. Une composition de revêtement comprenant la composition de la revendication 1.

6. La composition de revêtement de la revendication 5, contenant également un polymère d'hydrocarbure insaturé qui se décompose à des températures élevées mais inférieures au point de fusion de la résine perfluorocarbonée, et dans laquelle le polymère d'hydrocarbure insaturé agit comme auxiliaire de coalescence pour améliorer la formation de film par la résine perfluorocarbonée.

7. La composition de revêtement de la revendication 6, dans laquelle le polymère d'hydrocarbure insaturé est un polymère acrylique et qui contient également un catalyseur d'oxydation pour aider à décomposer le polymère acrylique.

8. La composition de revêtement de la revendication 7, qui contient également au moins l'un des composants suivants: un pigment, du mica, du mica revêtu d'un pigment, et des paillettes de métal.

9. La composition de revêtement de la revendication 8, dans laquelle le pigment inclut un oxyde de fer.

10. La composition de revêtement de la revendication 9, dans laquelle la zéolite est le bleu d'outremer.